# FASCICULE DE BREVET EUROPEEN

(11) **EP 1 871 562 B1**
(45) Date de publication et mention de la délivrance du brevet: **26.09.2012**
(21) Numéro de dépôt: 06726158.6
(22) Date de dépôt: 31.03.2006
(51) Int. Cl.: B23K 9/00, B24B 21/02, B23K 10/00

(54) **INSTALLATION ET PROCEDE DE FABRICATION D'UN CANDELABRE D'ECLAIRAGE PUBLIC METALLIQUE SOUDE**
SYSTEM UND VERFAHREN ZUR HERSTELLUNG EINES GESCHWEISSTEN LICHTMASTS AUS METALL
SYSTEM AND METHOD FOR PRODUCING A METAL WELDED LIGHT POLE

(30) Priorité: 13.04.2005 FR 0503691
(43) Date de publication de la demande: 02.01.2008
(73) Titulaire: Conimast International (SAS), 89600 Saint-Florentin (FR)
(72) Inventeur: DELOT, Yves, F-89134 Turny (FR); MATHIOT, Michel, F-89300 Looze (FR)
(74) Mandataire: Puiroux, Guy
(86) Numéro de dépôt international: PCT/FR2006/000709
(87) Numéro de publication internationale: WO 2006/108941

(56) Documents cités:
- US-A- 3 095 674
- US-A- 3 479 772
- PATENT ABSTRACTS OF JAPAN vol. 0155, no. 01, 18 décembre 1991 (1991-12-18) & JP 03 221312 A (ITSUO TAKESHITA), 30 septembre 1991 (1991-09-30)
- PATENT ABSTRACTS OF JAPAN vol. 2000, no. 09, 13 octobre 2000 (2000-10-13) & JP 2000 158141 A (KOBE STELL LTD), 13 juin 2000 (2000-06-13)

## Description

La présente invention concerne une installation et un procédé de fabrication d'un candélabre d'éclairage public métallique à partir d'une ébauche pliée métallique présentant deux bords longitudinaux rapprochés l'un de l'autre de manière à former un plan de joint à souder conformément aux préambules des revendications 1 et 6.

Les candélabres d'éclairage public sont généralement fabriqués à partir d'une ébauche métallique, de préférence en forme de trapèze, présentant deux bords longitudinaux et pliée sur elle-même jusqu'à rapprocher lesdits bords longitudinaux qui sont ensuite réunis par une soudure longitudinale pour former un fût.

La soudure longitudinale peut être réalisée par soudage à l'arc submergé. L'inconvénient de cette technologie est la formation d'un bourrelet inesthétique de l'ordre de 2 à 3 mm de hauteur sur 4 à 5 mm de largeur dans la génératrice du fût.

La soudure longitudinale peut être aussi réalisée par soudure en haute fréquence. La soudure doit ensuite être raclée ce qui entraîne désavantageusement la formation d'un méplat inesthétique de l'ordre de 6 mm.

La soudure longitudinale peut être encore réalisée par soudage à l'arc plasma. Cette technique ne laisse pas de bourrelet mais le cordon de soudure formé reste visible et présente un aspect inesthétique du fait notamment d'une rugosité apparente.

Afin de remédier à ces inconvénients, on peut fabriquer des candélabres en aluminium par extrusion. L'extrusion permet d'obtenir des fûts présentant un aspect uniforme, sans trace de cordon de soudure. Cependant l'extrusion est un procédé onéreux, et l'aluminium ne présente pas les propriétés mécaniques suffisantes pour la réalisation de candélabres d'une grande longueur. Pour ces raisons, le procédé de fabrication des candélabres en acier par soudage reste le procédé le plus couramment utilisé.

On connaît du brevet US 3,095,674 l'utilisation d'une machine d'émerisage pour la finition d'un article cylindrique galvanisé. Une telle machine n'est pas adaptée à la finition des candélabres d'éclairage public de grande longueur, et dont la forme est en général conique ou polygonale.

Il est donc nécessaire de développer un procédé de fabrication de candélabres d'éclairage public qui permet de concilier l'aspect économique de la technique de soudure et l'aspect esthétique de la technique d'extrusion et qui permet d'obtenir un candélabre soudé tout en présentant un aspect esthétique uniforme similaire à l'aspect fini d'un fît en aluminium extrudé.

A cet effet, et conformément à la présente invention, il est proposé un procédé de fabrication d'un candélabre d'éclairage public métallique à partir d'une ébauche pliée métallique présentant deux bords longitudinaux rapprochés l'un de l'autre de manière à former un plan de joint à souder, ledit procédé comprenant une étape de soudage dudit plan de joint pour former un cordon de soudure longitudinal, remarquable en ce qu'il comprend, après l'étape de soudage, une étape d'émerisage dudit cordon de soudure longitudinal.

D'une manière préférée, l'étape de soudage est réalisée en continu le long du plan de joint, et l'étape d'émerisage du cordon de soudure longitudinal est réalisée en continu et en temps masqué par rapport à ladite étape de soudage.

Pour la mise en oeuvre de ce procédé préféré, la présente invention concerne une installation pour la fabrication d'un candélabre d'éclairage public métallique à partir d'une ébauche pliée métallique présentant deux bords longitudinaux rapprochés l'un de l'autre de manière à former un plan de joint à souder, remarquable en ce qu'elle comprend :
- une unité de soudage agencée pour souder en continu le plan de joint et former un cordon de soudure longitudinal,
- une unité d'émerisage dudit cordon de soudure, ladite unité d'émerisage étant disposée à la sortie de l'unité de soudage et agencée pour émeriser ledit cordon de soudure en continu et en temps masqué par rapport au soudage.

Le procédé selon la présente invention permet d'obtenir un candélabre soudé présentant un aspect esthétique uniforme, selon lequel le cordon de soudure n'est pratiquement plus apparent.

L'installation selon la présente invention permet une mise en oeuvre particulièrement économique du procédé de l'invention.

D'autres avantages et caractéristiques ressortiront mieux de la description qui va suivre, du procédé et d'une Installation selon l'invention, donnée à titre d'exemple non limitatif, en référence aux dessins annexés sur lasquels :

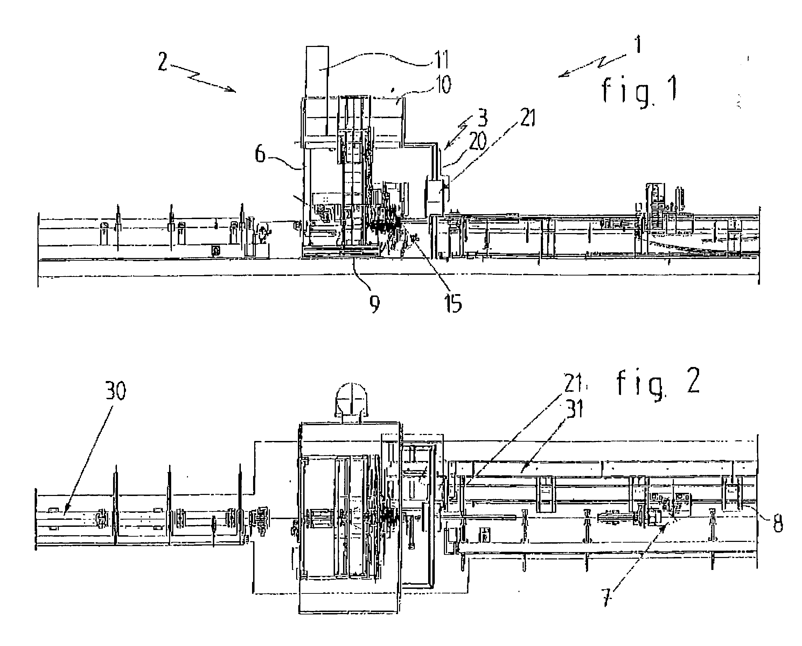

- la figure 1 est une vue schématique en coupe d'une installation conforme à l'invention,
- la figure 2 est une vue de dessus de ladite installation,

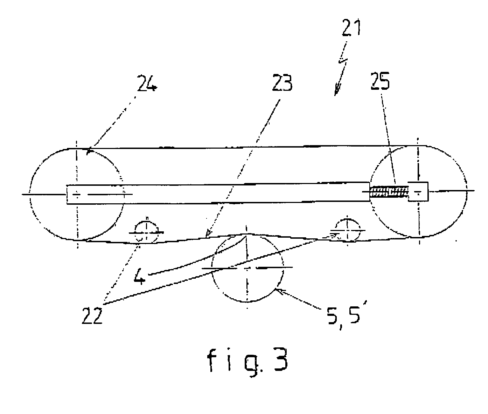

- la figure 3 est une vue schématique en coupe de l'unité d'émerisage conforme à l'invention.

Selon la présente invention, le procédé de fabrication d'un candélabre d'éclairage public métallique à partir d'une ébauche pliée métallique présentant deux bords longitudinaux rapprochés l'un de l'autre de manière à former un plan de joint à souder, comprend une étape de soudage dudit plan de joint pour former un cordon de soudure longitudinal, ainsi qu'une étape d'émerisage dudit cordon de soudure longitudinal. L'étape d'émerisage est réalisée après l'étape de soudage de manière à donner au cordon de soudure longitudinal formé un aspect poli, qui le rend peu visible.

De préférence, l'émerisage est réalisé perpendiculairement au cordon de soudure longitudinal.

L'ébauche pliée est de préférence réalisée dans un alliage métallique choisi parmi les aciers au carbone, les aciers inoxydables, et est obtenue à partir d'un trapèze métallique présentant deux bords longitudinaux. Pour constituer l'ébauche, le trapèze métallique est plié jusqu'à rapprocher lesdits bords longitudinaux suffisamment l'un de l'autre pour permettre leur assemblage par soudure. L'ébauche pliée est en général de forme conique et peut présenter une section circulaire ou polygonale, à 8, 12 ou 16 côtés.

Selon un mode de mise en oeuvre particulièrement préféré, l'étape de soudage est réalisée en continu le long du plan de joint, et l'étape d'émerisage du cordon de soudure longitudinal est également réalisée en continu et en temps masqué par rapport à ladite étape de soudage.

Pour la mise en oeuvre de ce procédé préféré, la présente invention propose, en référence aux figures, une installation 1 comprenant une unité de soudage 2 et une unité d'émerisage 3, ainsi qu'une table d'introduction 30 et une table de sortie 31. L'unité de soudage 2 est agencée pour souder en continu un plan de joint 4 d'une ébauche pliée métallique 5 présentant deux bords longitudinaux rapprochés l'un de l'autre de manière à former ledit plan de joint à souder 4. Une telle unité de soudage 2 est par exemple fabriquée par SAFMATIC. L'unité de soudage 2 comprend notamment un portique de soudage 6 au travers duquel se déplace l'ébauche 5 grâce à des moyens de déplacement comprenant une pince hydraulique 7 maintenant l'ébauche 5 et entraînée par un chariot tracteur mobile 8. La vitesse du chariot 8 est réglable, une vitesse de 40 m/minute permettant un retour du chariot en temps masqué. La pince 7 disposée à l'extrémité du chariot 8 est montée de manière à présenter trois degrés de liberté pour s'adapter aux déformations de l'ébauche 5 lorsqu'elle passe dans le portique de soudage 6. La pince 7 est agencée de manière à ne pas déformer ni marquer l'ébauche 5.

Le portique de soudage 6 comprend un bâti 9 surmonté d'une passerelle 10 sur laquelle sont regroupés les générateurs de soudage et l'armoire de distribution 11. De chaque côté du bâti 9 sont prévus des moyens pour maintenir rapprochés les deux bords longitudinaux de l'ébauche 5. Ces moyens comprennent des galets agencés pour refermer l'ébauche 5 au droit du soudage et réalisés en matière plastique pour ne pas marquer l'ébauche 5.

En partie centrale, le bâti 9 comprend une glissière verticale munie de deux galets et supportant au moins une tête de soudage 15. Les galets viennent en appui vertical sur l'ébauche 5 pour définir la hauteur nominale d'arc. La tête de soudage 15 est de préférence une tête de soudage par arc plasma. Il est bien évident que le soudage peut également être réalisé à l'arc submergé ou en haute fréquence, l'unité de soudage étant alors adaptée à ces technologies. Les têtes de soudage par arc plasma, arc submergé ou en haute fréquence, sont connues en soi et n'appellent pas de commentaire particulier.

L'unité d'émerisage 3 du cordon de soudure formé est disposée à la sortie de l'unité de soudage 2, de préférence directement à la sortie de la tête de soudage 15. L'unité d'émerisage 3 comprend une glissière verticale 20 sur laquelle est montée une tête d'émerisage 21 comprenant des moyens 22 de mise en pression avec le candélabre soudé 5'. La tête d'émerisage 21 comprend une bande abrasive 23 entraînée par une roue d'entraînement 24 et dont la tension est assurée par une unité de guidage pneumatique 25. Un régulateur de pression avec un manomètre permet de régler la force de tension de la bande abrasive 23. La bande abrasive 23 est disposée perpendiculairement au fût 5' et au cordon de soudure longitudinal. L'unité d'émerisage 3 est agencée pour émeriser le cordon de soudure en continu et en temps masqué par rapport au soudage. Pour cela, l'installation 1 selon l'invention comprend des moyens de pilotage pour piloter automatiquement l'unité de soudage 2, l'unité d'émerisage 3, les moyens de déplacement 7 et 8 de l'ébauche 5 et du candélabre soudé 5'. Ces moyens de pilotage sont programmés de sorte que lorsque la pince 7 et le chariot tracteur 8 commencent à tirer l'ébauche 5 installée sur la table d'introduction 30, la descente de la tête d'émerisage 21 est commandée. Lorsque la tête d'émerisage 21 arrive au contact du candélabre soudé 5' sortant de l'unité de soudage 2, la bande abrasive 23 est mise en mouvement de sorte que l'émerisage est effectué en continu sur le cordon de soudure au fur et à mesure de l'avancée du candélabre 5'. Pendant ce temps, l'unité de soudage 2 continue à réaliser le soudage de l'ébauche 5 en continu. Le candélabre soudé 5' est ensuite évacué par la table de sortie 31.

Le candélabre métallique 5' issu de l'installation selon la présente invention, bien qu'obtenu par soudage, présente un aspect esthétique uniforme, selon lequel le cordon de soudure n'est pratiquement plus apparent.

Il est bien évident que le procédé selon la présente invention peut être mis en oeuvre au moyen d'une installation de soudage et d'une machine d'émerisage indépendantes l'une de l'autre.

Toutefois, l'installation selon la présente invention présente des avantages économiques. En effet, l'émerisage étant réalisé en temps masqué par rapport au soudage, les gains de temps sont importants. De plus, l'installation selon l'invention permet également d'éviter les opérations de manutention requises lorsque l'émerisage est réalisé par une machine indépendante de l'installation de soudage, ce qui nécessite le transport du candélabre soudé d'une installation à l'autre. Par ailleurs, lorsque l'émerisage est réalisé directement à la sortie de l'étape de soudage, on réduit la consommation des bandes abrasives, du fait que le cordon de soudure encore tiède est beaucoup plus tendre.

## Revendications

1. Procédé de fabrication d'un candélabre d'éclairage public métallique (5') à partir d'une ébauche métallique (5). pliée qui est en général de forme conique et qui présente une section circulaire ou polygonale à 8, 12 ou 16 côtés et deux bords longitudinaux rapprochés l'un de l'autre de manière à former un plan de joint (4) à souder, ledit procédé comprenant une étape de soudage dudit plan de joint (4) pour former un cordon de soudure longitudinal, **caractérisé en ce qu'**il comprend, après l'étape de soudage, une étape d'émerisage dudit cordon de soudure longitudinal, l'ébauche métallique (5) et/ou le candélabre (5') étant montés mobiles en translation, la soudure du plan de joint (4) et/ou l'émerisage du cordon de soudure longitudinal étant effectués au fur et à mesure de l'avancée de ladite ébauche et/ou dudit candélabre.

2. Procédé selon la revendication 1, **caractérisé en ce que** l'étape de soudage est réalisée en continu le long du plan de joint (4), et **en ce que** l'étape d'émerisage du cordon de soudure longitudinal est réalisée en continu et en temps masqué par rapport à ladite étape de soudage, les deux étapes étant réalisées sur une même installation (1).

3. Procédé selon l'une quelconque des revendications précédentes, **caractérisé en ce que** le soudage est réalisé par un procédé à l'arc plasma.

4. Procédé selon l'une quelconque des revendications précédentes, **caractérisé en ce que** l'émerisage est réalisé perpendiculairement au cordon de soudure longitudinal.

5. Procédé selon l'une quelconque des revendications précédentes, **caractérisé en ce que** l'ébauche pliée métallique (5) est réalisée dans un alliage métallique choisi parmi les aciers au carbone, les aciers inoxydables.

6. Installation (1) pour la fabrication d'un candélabre d'éclairage public métallique (5') à partir d'une ébauche métallique (5) pliée qui est en général de forme conique et qui présente une section circulaire ou polygonale à 8, 12 ou 16 côtés et deux bords longitudinaux rapprochés l'un de l'autre de manière à former un plan de joint (4) à
souder, comprenant pour la mise en oeuvre du procédé selon la revendication 2,
- une unité de soudage (2) agencée pour souder en continu ledit plan de joint (4) et former un cordon de soudure longitudinal, **caractérisée en ce qu'**elle comprend :
- une unité d'émerisage (3) dudit cordon de soudure, ladite unité d'émerisage (3) étant disposée à la sortie de l'unité de soudage (2) et agencée pour émeriser ledit cordon de soudure en continu et en temps masqué par rapport au soudage, et
- des moyens de déplacement (7, 8) en translation de l'ébauche (5) et/ou du candélabre métallique (5') dans les unités de soudage (2) et d'émerisage (3).

7. Installation (1) selon la revendication 6, **caractérisée en ce que** l'unité de soudage (2) comprend une tête de soudage (15) par arc plasma.

8. Installation (1) selon l'une quelconque des revendications 6 et 7, **caractérisée en ce que** l'unité d'émerisage (3) comprend une bande abrasive (23) disposée perpendiculairement au cordon de soudure longitudinal.

9. Installation (1) selon l'une quelconque des revendications 6 à 8, **caractérisée en ce qu'**elle comprend des moyens pour maintenir rapprochés les deux bords longitudinaux de l'ébauche (5).

10. Installation (1) selon l'une quelconque des revendications 6 à 9, **caractérisée en ce qu'**elle comprend des moyens de pilotage pour piloter automatiquement l'unité de soudage (2), l'unité d'émerisage (3), les moyens de déplacement (7, 8) de l'ébauche (5) et/ou du candélabre d'éclairage public soudé (5').

## Claims

1. Method of manufacturing a metal public-lighting lamppost (5') from a folded metal blank (5) that is in general conical in shape and has a circular or polygonal cross section with 8, 12 or 16 sides and two longitudinal edges brought close to each other so as to form a joint face (4) to be welded, said method comprising a step of welding said joint face (4) in order to form a longitudinal weld bead, **characterised in that** it comprises, after the welding step, a step of smoothing said longitudinal weld bead, the metal blank (5) and/or the lamppost (5') being mounted so as to be able to move in translation, the welding of the joint face (4) and/or the smoothing of the longitudinal weld bead being effected as said blank and/or said lamppost advances.

2. Method according to claim 1, **characterised in that** the welding step is performed continuously along the joint face (4) and **in that** the step of smoothing the longitudinal weld bead is performed continuously and concurrently with said welding step, the two steps being performed on the same equipment (1).

3. Method according to any one of the preceding claims, **characterised in that** the welding is performed by a plasma arc method.

4. Method according to any one of the preceding claims, **characterised in that** the smoothing is carried out perpendicular to the longitudinal weld bead.

5. Method according to any one of the preceding claims, **characterised in that** the folded metal blank (5) is produced from a metal alloy chosen from carbon steels and stainless steels.

6. Equipment (1) for implementing the method according to claim 2, for manufacturing a metal public-lighting lamppost (5') from a folded metal blank (5) that is in general conical in shape and that has a circular or polygonal cross section with 8, 12 or 16 sides and two longitudinal edges brought close together so as to form a joint face (4) to be welded, comprising
- a welding unit (2) arranged to continuously weld said joint face (4) and form a longitudinal weld bead, **characterised in that** it comprises:
- a unit (3) for smoothing said weld bead, said smoothing unit (3) being placed at the discharge from the welding unit (2) and arranged so as to smooth said weld bead continuously and concurrently with respect to the welding, and
- means (7, 8) of moving the blank (5) and/or the metal lamppost (5') in translation in the welding (2) and smoothing units (3).

7. Equipment (1) according to claim 6, **characterised in that** the welding unit (2) comprises a plasma arc welding head (15).

8. Equipment (1) according to either one of claims 6 and 7, **characterised in that** the smoothing unit (3) comprises an abrasive band (23) arranged perpendicular to the longitudinal weld bead.

9. Equipment (1) according to any one of claims 6 to 8, **characterised in that** it comprises means for keeping the two longitudinal edges of the blank (5) close together.

10. Equipment (1) according to any one of claims 6 to 9, **characterised in that** it comprises control means for automatically controlling the welding unit (2), the smoothing unit (3), and the means (7, 8) of moving the blank (5) and/or the welded public-lighting lamppost (5').

## Patentansprüche

1. Verfahren zur Herstellung eines Lichtmasts aus Metall (5') aus einem gebogenen Rohling aus Metall (5), der im Allgemeinen eine konische Form hat und einen ringförmigen oder polygonalen Schnitt mit 8, 12 oder 16 Seiten und zwei Längsrändern aufweist, die aneinander angenähert sind, um eine zu schweißende Verbindungsfläche (4) zu bilden, wobei das Verfahren einen Schritt des Schweißens der Verbindungsfläche (4) umfasst, um eine längsgerichtete Schweißnaht zu bilden, **dadurch gekennzeichnet, dass** es nach dem Schritt des Schweißens einen Schritt des Schmirgelns der längsgerichteten Schweißnaht umfasst, wobei der Rohling aus Metall (5) und/oder der Lichtmast (5') translatorisch beweglich montiert ist/sind, wobei die Schweißung der Verbindungsfläche (4) und/oder die Schmirgelung der längsgerichteten Schweißnaht in dem Masse durchgeführt wird/werden, wie der Rohling und/oder der Lichtmast vorrücken.

2. Verfahren nach Anspruch 1, **dadurch gekennzeichnet, dass** der Schritt des Schweißens ununterbrochen entlang der Verbindungsfläche (4) durchgeführt wird, und dadurch, dass der Schritt des Schmirgelns der längsgerichteten Schweißnaht ununterbrochen und in maskierter Zeit mit Bezug auf den Schritt des Schweißens durchgeführt wird, wobei die zwei Schritte in einer gleichen Anlage (1) durchgeführt werden.

3. Verfahren nach einem der vorhergehenden Ansprüche, **dadurch gekennzeichnet, dass** die Schweißung durch ein Plasmalichtbogen-Verfahren durchgeführt wird.

4. Verfahren nach einem der vorhergehenden Ansprüche, **dadurch gekennzeichnet, dass** die Schmirgelung senkrecht zur längsgerichteten Schweißnaht durchgeführt wird.

5. Verfahren nach einem der vorhergehenden Ansprüche, **dadurch gekennzeichnet, dass** der gebogene Rohling aus Metall (5) aus einer Metalllegierung hergestellt ist, ausgewählt aus den Kohlenstoffstählen, den rostfreien Stählen.

6. Anlage (1) zur Durchführung des Verfahrens nach Anspruch 2 zur Herstellung eines Lichtmasts aus Metall (5') aus einem gebogenen Rohling aus Metall (5), der im Allgemeinen eine konische Form hat, und der einen ringförmigen oder polygonalen Schnitt mit 8, 12 oder 16 Seiten und zwei Längsrändern aufweist, die aneinander angenähert sind, um eine zu schweißende Verbindungsfläche (4) zu bilden, umfassend:
- eine Schweißeinheit (2), die angeordnet ist, um ununterbrochen die Verbindungsfläche (4) zu schweißen und eine längsgerichtete Schweißnaht zu bilden, **dadurch gekennzeichnet, dass** sie Folgendes umfasst:
- eine Einheit zur Schmirgelung (3) der Schweißnaht, wobei sich die Schmirgeleinheit (3) am Ausgang der Schweißeinheit (2) befindet und angeordnet ist, um die Schweißnaht unterbrochen und in maskierter Zeit mit Bezug auf die Schweißung zu schmirgeln, und
- Mittel zur translatorischen Verschiebung (7, 8) des Rohlings (5) und/oder des Lichtmasts aus Metall (5') in den Schweiß- (2) und Schmirgeleinheiten (3).

7. Anlage (1) nach Anspruch 6, **dadurch gekennzeichnet, dass** die Schweißeinheit (2) einen Kopf zur Schweißung (15) durch Lichtbogenplasma umfasst.

8. Anlage (1) nach einem der Ansprüche 6 und 7, **dadurch gekennzeichnet, dass** die Schmirgeleinheit (3) ein Schleifband (23) umfasst, das senkrecht zur längsgerichteten Schweißnaht angebracht ist.

9. Anlage (1) nach einem der Ansprüche 6 bis 8, **dadurch gekennzeichnet, dass** sie Mittel umfasst, um die zwei Längsränder des Rohlings (5) angenähert zu halten.

10. Anlage (1) nach einem der Ansprüche 6 bis 9, **dadurch gekennzeichnet, dass** sie Regelmittel umfasst, um die Schweißeinheit (2), die Schmirgeleinheit (3), die Mittel zur Verschiebung (7, 8) des Rohlings (5) und/oder des geschweißten Lichtmasts (5') automatisch zu regeln.
